# EUROPÄISCHE PATENTSCHRIFT

(11) **EP 0 983 487 B1**
(45) Veröffentlichungstag und Bekanntmachung des Hinweises auf die Patenterteilung: **11.04.2001**
(21) Anmeldenummer: 98921348.3
(22) Anmeldetag: 10.03.1998
(51) Int. Cl.: G01F 1/10

(54) **VORRICHTUNG ZUR BESTIMMUNG DER STRÖMUNGSGESCHWINDIGKEIT EINES MEDIUMS, Z.B. EINER FLÜSSIGKEIT ODER EINES GASES**
DEVICE FOR DETERMINING THE FLOW RATE OF A MEDIUM, INCLUDING A LIQUID OR A GAS
DISPOSITIF POUR DETERMINER LE DEBIT D'UN ELEMENT, NOTAMMENT LIQUIDE OU GAZEUX

(30) Priorität: 23.05.1997 WO PCT/DE97/01063
(43) Veröffentlichungstag der Anmeldung: 08.03.2000
(73) Patentinhaber: Dr. Siebert & Kühn GmbH & Co. KG., 34260 Kaufungen (DE)
(72) Erfinder: SIEBERT, Christian, D-34131 Kassel (DE); TRINTER, Frank, D-34260 Kaufungen (DE)
(74) Vertreter: Walther, Robert, Dipl.-Ing.
(86) Internationale Anmeldenummer: DE9800706
(87) Internationale Veröffentlichungsnummer: WO9853279

(56) Entgegenhaltungen:
- WO-A-92/21939
- CH-A- 308 922
- DE-A- 3 415 366
- FR-A- 2 519 766
- US-A- 5 372 048
- PATENT ABSTRACTS OF JAPAN vol. 006, no. 082 (P-116), 20. Mai 1982 & JP 57 020611 A (YAMATAKE HONEYWELL CO LTD), 3. Februar 1982
- PATENT ABSTRACTS OF JAPAN vol. 006, no. 002 (P-096), 8. Januar 1982 & JP 56 128414 A (KITANO AKITOSHI), 7. Oktober 1981

## Beschreibung

Vorrichtung zur Bestimmung der Strömungsgeschwindigkeit eines Mediums, z. B. einer Flüssigkeit oder eines Gases, umfassend ein Gehäuse mit einer von dem Medium axial durchströmten Kammer zur Aufnahme eines Flügelrades mit mindestens einem Flügel, wobei das Flügelrad einen Trägerkörper mit einer zentrischen Bohrung zur Aufnahme einer Achse aufweist, wobei der Trägerkörper im Bereich der Achse mindestens eine zu der zentrischen Bohrung im Trägerkörper hinführende radial verlaufende Öffnung aufweist.

Aus der DE 41 11 001 ist eine Vorrichtung bekannt, in der in einer Bohrung eines Gehäuses ein Flügelrad angeordnet ist, das in Drehung versetzt wird. Zur Erzeugung der Rotation des Flügelrades ist dem Flügelrad ein sogenannter "Drallkörper" vorgelagert. Dieser Drallkörper bewirkt einen Drall in der Strömung, der wiederum das Flügelrad in Rotation versetzt. Zur Ermittlung der Rotationsgeschwindigkeit befinden sich an den Enden der Flügel Magnete, wobei durch die Magnete in eine im Gehäuse angeordnete Spule eine Spannung induziert wird. Durch die Zählung der Spannungsimpulse in der Spule, die durch die magnetisch ausgebildeten Flügel des Flügelrades hervorgerufen werden, kann die Rotationsgeschwindigkeit des Flügels ermittelt werden. Diese Rotationsgeschwindigkeit stellt ein Maß für die Strömungsgeschwindigkeit des Mediums dar.

Aus der FR-A 2 717 536 ist eine Vorrichtung zur Ermittlung der Drehzahl einer Turbine bekannt, bei der der Turbine eine Lochscheibe vorgelagert ist, um die ankommende Strömung zu vergleichmäßigen.

Aus der CH-PS 308922 ist ein Durchflußmesser mit einem Rotor bekannt, wie er für die Mengenmessung von Fluiden verwendet wird. Der Rotor umfaßt einen Trägerkörper mit einem Pulsgeber in Form eines Magneten, der mit einer entsprechenden Spule im Gehäuse des Durchflußmessers zusammenarbeitet. Auf dem Trägerkörper sind darüber hinaus Flügel angeordnet, die am hinteren Ende des Trägerkörpers angeordnet sind, wobei der Trägerkörper in dem Gehäuse axial beweglich gelagert ist.

Die in der US-PS 5,372,048 beschriebene Vorrichtung zeigt ein Gehäuse mit einem Flügelrad, wobei die Lagerung des Flügelrades durch eine Achse erfolgt. Auch hier ist vorgesehen, daß das Flügelrad axial beweglich durch die Achse aufnehmbar ist. Das Flügelrad selbst besitzt auf seinem äußeren Umfang einen Magnetkäfig, der als Impulsgeber für eine im Gehäuse angeordnete Spule dient, um die Drehzahl des Rotors zu ermitteln.

Die JP-A 56128414 zeigt einen turbinenförmiges Durchflußmesser, bei dem der mit Flügeln versehene Rotor magnetisch im Gehäuse gelagert ist. Die Flügel selbst sind kreuzweise auf dem Gehäuse des Rotors angeordnet.

Gleichfalls einen Durchflußmesser zeigt die JP 57020611, wobei der Rotor zwei kreuzweise angeordnete Flügel aufweist, in deren Kreuzungspunkt als Impulsgeber ein Magnet angeordnet ist.

Aus der DE-A 34 15 366 ist ein Wasserzähler bekannt, wobei das Turbinenrad radial angeströmt wird. Die Lagerung des Turbinenrades erfolgt durch Radiallager auf einer Achse, wobei die Radiallager durch einen Kanal mit einer Zentrifugalkammer des Flügelrades in Verbindung stehen, so daß durch die Wasserströmung Schmutzteilchen aus den Lagern herausgespült werden sollen. Dieser Wasserzähler baut aufgrund der radialen Anströmung verhältnismäßig groß. Um die Impulsrate des Zählwerkes und damit einhergehend die Genauigkeit dieses Zählers zu erhöhen, ist ein Getriebe vorgesehen, wodurch die Baugröße noch weiter erhöht wird. Nachteilig an diesem Zähler ist weiterhin, daß er in Durchflußrichtung horizontal ausgerichtet eingebaut werden muß, da ansonsten der Verschleiß im Bereich der Lager zu hoch ist. Es ist darüber hinaus zu befürchten, daß aufgrund der Führung des Spülkanals, im Wasser befindliche Schmutzteilchen in die Lager gespült werden und dort zu einem erhöhten Verschleiß führen. Von einer Verschleißminderung ist daher nicht auszugehen.

Aus der WO 92/21939 ist eine Vorrichtung der eingangs genannten Art bekannt. Hierbei sind im Trägerkörper für das Flügelrad im Bereich des Endes der Achse zwei radial verlaufende Bohrungen vorgesehen, die einander gegenüberliegend im Trägerkörper angeordnet sind. Durch die Bohrungen soll erreicht werden, daß Flüssigkeit in den Bereich zwischen Achse und Trägerkörper gelangt und dort für Schmierung, Kühlung und Spülung sorgt. Es ist allerdings nicht vorstellbar, daß die Flüssigkeit durch beide Bohrungen eintritt und an der Öffnung der Achsbohrung des Trägerkörpers austritt. Dies deshalb, weil der Strömungswiderstand im Bereich zwischen Achse und Trägerkörper größer ist als der Widerstand, den eine der zuvorgenannten Bohrungen aufweist. Es ist daher davon auszugehen, daß die Flüssigkeit durch die eine radiale Bohrung einströmt und durch die andere radiale Bohrung ausströmt. Selbst wenn man davon ausgeht, daß nennenswerte Flüssigkeitsmengen in den Bereich zwischen Achse und Bohrung des Trägerkörpers gelangen, so besteht hierbei doch die Gefahr, daß im Wasser mitgeführte Schmutzpartikel in diesen Bereich gelangen und hier zu einem schnellen Verschleiß führen. Denn schlußendlich werden auch durch das Strömungsmedium, beispielsweise Wasser, nicht unerhebliche Mengen an Schmutzpartikeln mitgeführt werden.

Es hat sich nunmehr gezeigt, daß in Abhängigkeit von der Durchflußmenge das Flügelrad eine Drehzahl von bis zu 30 000 Umdrehungen pro Minute erreichen kann. Es hat sich weiterhin gezeigt, daß bei derartigen Drehzahlen eine nicht unerhebliche Erwärmung der Lagerung des Flügelrades aufgrund der Reibung zwischen Achse und Flügelrad bzw. Trägerkörper stattfindet. Diese Reibung bewirkt einen erheblichen Verschleiß an der Lagerung des Flügelrades.

Der Erfindung liegt daher die Aufgabe zugrunde, eine Vorrichtung der eingangs genannten Art derart weiterzubilden, daß diese auch bei hohen Drehzahlen und einem mit Schmutzpartikeln versehenen Medium eine genügend lange Lebensdauer aufweist.

Die Aufgabe wird erfindungsgemäß dadurch gelöst, daß die Achse durch mindestens ein, vorzugsweise zwei Radiallager in dem Trägerkörper gelagert ist, wobei zwischen der Bohrung des Trägerkörpers und der Achse ein radiales Spiel vorgesehen ist.

In Strömungsrichtung gesehen entsteht hinter dem Flügel bei Rotation des Trägerkörpers ein geringer Unterdruck. Durch den Unterdruck wird Flüssigkeit aufgrund des radialen Spiels der Radiallager in die zentrische Bohrung des Trägerkörpers eingesogen und durch die radial verlaufende Öffnung im vorderen Teil des Trägerskörpers herausgedrückt. Es hat sich herausgestellt, daß in der Flüssigkeit vorhandene und mit der Strömung eingeführte Schmutzpartikel unmittelbar aus der Kammer herausgespült werden, ohne daß sie jedoch in die zentrische Bohrung gelangen. Hieraus wird deutlich, daß ein andauernder Austausch von Flüssigkeit in der zentrischen Bohrung des Trägerkörpers mit der Folge stattfindet, daß eine kontinuierliche Kühlung möglich ist, und damit einhergehend auch immer genügend Flüssigkeit zur Schmierung des Lagers bzw. der Achse vorhanden ist. Es hat sich gezeigt, daß selbst bei Drehzahlen von bis zu 30 000 Umdrehungen pro Minute mit einer derartigen Konstruktion eine ausreichende Lebensdauer der Vorrichtung gewährleistet werden kann.

Im Einzelnen ist vorgesehen, daß zur Lagerung der Achse in dem vorzugsweise zylindrischen Trägerkörper ein Axiallager vorgesehen ist.

Nach einem weiteren Merkmal der Erfindung ist vorgesehen, daß sich die Flügel über einen wesentlichen Teil der Länge des zylindrischen Trägerkörpers erstrecken. Durch eine derart lange Beschaufelung wird ein hoher Wirkungsgrad erreicht, was im Wesentlichen darin begründet ist, daß die Druckverluste gering gehalten werden können. Diesem Ziel dient auch die Maßnahme, wonach die Flügel einen Anstellwinkel von etwa 45 ° zeigen.

Nach einem weiteren, besonderen Merkmal der Erfindung ist der Flügel nach Art eines Bogens ausgebildet, wobei im Einzelnen zwei nach Art eines Bogens, insbesondere elliptischen Bogens, ausgebildete Flügel diagonal bzw. kreuzweise zueinander verlaufend auf dem Umfang des zylindrischen Trägerkörpers angeordnet sind. Die elliptische Form des Flügels ergibt sich durch die diagonale Erstreckung des Flügels über den Umfang des Trägerkörpers. Durch einen Flügel, der nach Art eines Bogens, oder auch wellenförmigen Schwingung geformt ist, wird eine relativ große Flügelfläche bereitgestellt, wobei der Durchmesser des Flügelrades insgesamt jedoch geringgehalten werden kann. Wie bereits an anderer Stelle ausgeführt, dient eine derartige große Flügelfläche dazu den Wirkungsgrad der Vorrichtung insgesamt zu erhöhen. Durch die kreuzweise Anordnung der Flügel auf dem Umfang des Trägerkörpers wird bewirkt, daß die auftretenden radialen Kräfte sich im Wesentlichen aufheben, was den Vorteil hat, daß auch durch diese Maßnahme die radialen Lager nur geringfügig belastet werden.

Nach einem besonderen Merkmal der Erfindung ist der Kreuzungspunkt der Flügel des Flügelrades in Strömungsrichtung gesehen mit Abstand von dem Axiallager auf dem Trägerkörper angeordnet; hierbei erstreckt sich der Trägerkörper vorteilhaft in axialer Richtung wesentlich über die Länge der auf dem Trägerkörper angeordneten Flügel. Insbesondere durch einen großen Abstand zwischen dem Kreuzungspunkt der Flügel auf dem Flügelrad und dem Axiallager wird erreicht, daß sich das Flügelrad, ähnlich einem Pfeil, selbst zentriert, so daß die radialen Lager, mit denen die Achse gegenüber dem Trägerkörper gelagert ist, nur eine geringe Beanspruchung erfahren, und somit die Lebensdauer der Vorrichtung insgesamt wesentlich erhöht werden kann. Diese quasi automatische Zentrierung des Flügelrades ist darin begründet, daß aufgrund der Anordnung der Flügel auf dem Trägerkörper dieser, wie auch ein Pfeil, immer das Bestreben hat, sich zentrisch in der Kammer des Gehäuses auszurichten. Wenn insofern auch die Achse zentrisch in der Kammer angeordnet ist, findet, wie bereits oben ausgeführt, ein nur geringer Verschleiß im Bereich der radialen Lager statt.

Zur Ermittlung der Drehzahl des Flügelrades weist der Trägerkörper in Strömungsrichtung gesehen vor dem Axiallager einen Impulsgeber, z. B. einen Magneten, auf, der mit einem im Gehäuse angeordneten Impulsnehmer, z. B. einer Spule, zusammenarbeitet.

Eine besonders vorteilhafte Ausführungsform der Vorrichtung zeichnet sich dadurch aus, daß in Strömungsrichtung gesehen vor dem Trägerkörper eine vordere Lochscheibe zur Vergleichmäßigung bzw. Ausrichtung der turbulenten Strömung im Gehäuse bzw. in der Kammer angeordnet ist. Durch die Anordnung einer derartigen Lochscheibe wird erreicht, daß die Strömung bei Auftreffen auf das Flügelrad nach Durchgang durch die Lochscheibe zwar immer noch turbulent, aber dennoch so gerichtet ist, daß unmittelbar bei Auftreffen des Mediums auf die Flügel des Flügelrades das Flügelrad selbst in Rotation versetzt wird. Dies wird üblicherweise nach dem Stand der Technik nur dadurch erreicht, daß in dem Gehäuse eine lange Vorlaufstrecke zur Verfügung gestellt wird, innerhalb derer sich die Strömung vergleichmäßigen kann. Mit Hilfe einer derart vergleichmäßigten aber dennoch turbulenten Strömung wird erreicht, daß genaue Messungen über einen großen Meßbereich, d. h. bei unterschiedlich großen Durchflußmengen, möglich sind.

In Strömungsrichtung gesehen hinter dem Flügelrad befindet sich eine zweite Lochscheibe, die korrespondierend zu der ersten vorderen Lochscheibe ausgebildet ist, und die auch der Aufnahme der Achse für den Trägerkörpers des Flügelrades dient. Üblich ist nach dem Stand der Technik ebenfalls, daß nach dem Flügelrad eine gewisse Nachlaufstrecke vorhanden ist, um Störungen aus dem Verlauf der nachfolgenden Strömung, beispielsweise durch Verwirbelung, zu vermeiden. Dies deshalb, weil derartige Verwirbelungen, obwohl sie hinter dem Flügelrad entstehen, abhängig vom nachfolgenden Leitungsverlauf dennoch Einfluß auf die Drehzahl und damit das Ansprechverhalten des Flügelrades insgesamt haben können.

Anhand der Zeichnungen wird die Erfindung nachstehend beispielhaft näher erläutert:
- Figur 1: zeigt die Vorrichtung einer Seitenansicht im Schnitt;
- Figur 2: zeigt das Flügelrad in perspektivischer Darstellung;.
- Figur 3: zeigt das Flügelrad gemäß Figur 2 um 90 ° gedreht.

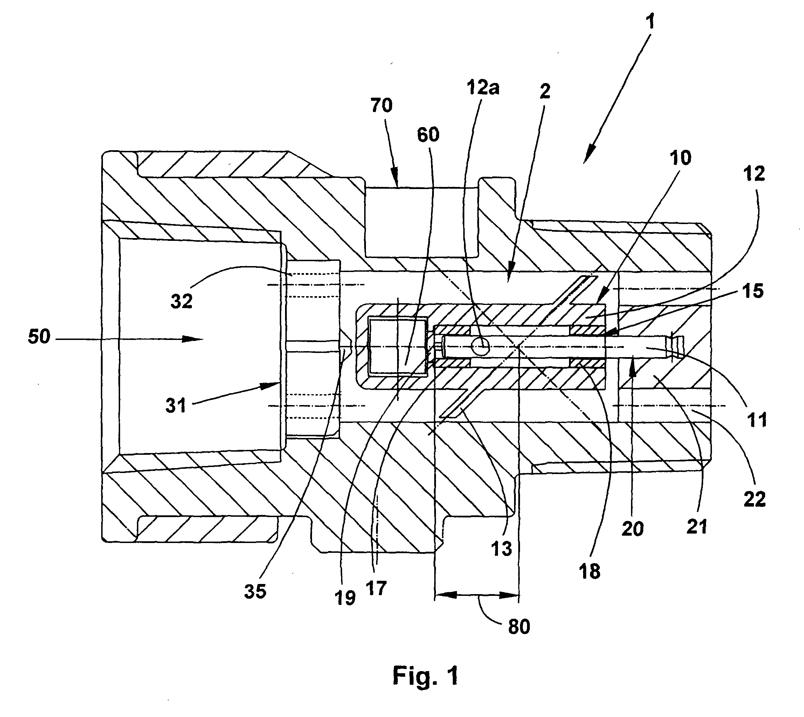

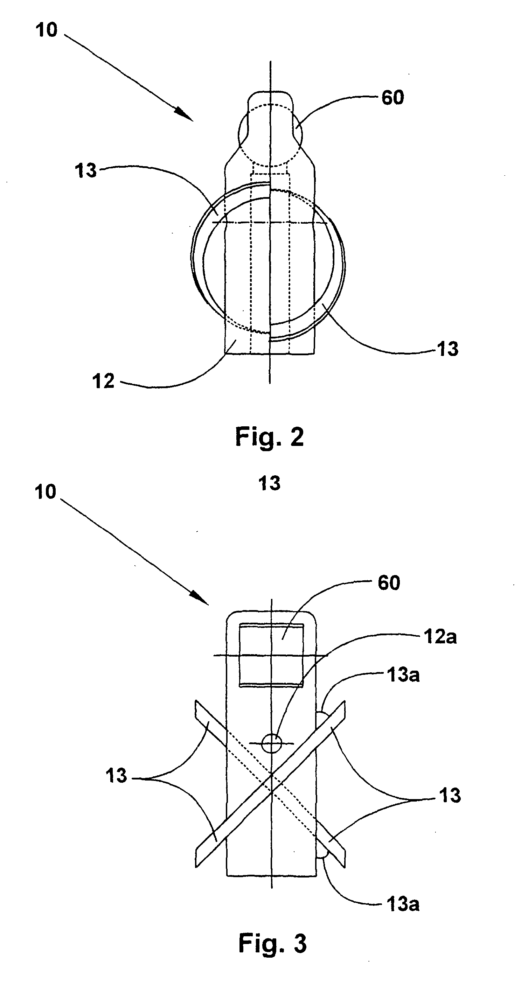

Gemäß Figur 1 ist das Gehäuse der Vorrichtung mit 1 bezeichnet; in dem Gehäuse 1 befindet sich eine Kammer 2, die der Aufnahme des insgesamt mit 10 bezeichneten Flügelrades dient, wobei der Trägerkörper 12 des Flügelrades 10 in der Bohrung 15 die Achse 11 aufnimmt, die durch die Bohrung 20 in der hinteren Lochscheibe 21 gehalten ist. Die Lochscheibe 21 weist kreisförmig umfangverteilt acht Bohrungen 22 auf. Der Trägerkörper 12 des Flügelrades erstreckt sich über den größten Teil der Länge der Kammer 2. In Durchflußrichtung gemäß Pfeil 50 gesehen, sind auf dem Trägerkörper 12 bogenartig ausgebildete Flügel 13 angeordnet (siehe Fig. 2 und Fig. 3). Das heißt, daß sich die bogenförmigen Flügel diagonal bzw. kreuzweise über den Umfang des Trägerkörpers erstrecken. Der Anstellwinkel 13a der Flügel 13 beträgt etwa 45 °.

Gelagert ist der Trägerkörper 12 durch die Achse 11 dadurch, daß zwei radiale Lager 17, 18 vorgesehen sind, sowie ein axiales Lager 19. Wie bereits erwähnt, ist die Achse mit radialem Spiel durch die Lager 17 und 18 aufnehmbar, wodurch erreicht wird, daß das in der Kammer 2 vorhandene Medium, beispielsweise Wasser, in die Bohrung 15 des Trägerkörpers 12 eindringen kann, und durch die radial im Trägerkörper angeordnete Öffnung 12a nach außen tritt. Hierdurch wird demzufolge ein gewisser Spüleffekt erzeugt, d. h. es findet eine kontinuierliche Kühlung und Schmierung der Achsenlager 17 - 19 statt, da die Öffnung zwischen den Lagern 18 und 17 und 19 im Trägerkörper angeordnet ist. Durch die Spülung wird darüber hinaus bewirkt, daß in der Bohrung 15 vorhandene Schmutzpartikel ausgespült werden können, was den Verschleiß an den Lagern insgesamt weiter herabsetzt.

Dem Axiallager 19 entgegen der Strömungsrichtung vorgelagert, befindet sich der Magnet 60, der mit einem am Gehäuse angeordneten Impulsnehmer, beispielsweise einer Spule 70, zusammenarbeitet. Die Spule 70 ist allerdings in der Zeichnung gemäß Figur 1 nur schematisch angedeutet.

Die Anordnung der Flügel 13 auf dem Trägerkörper 12 ist nun derart, daß sich der Kreuzungspunkt der Flügel auf dem Trägerkörper beabstandet (Pfeil 80) von dem Axiallager 19 befindet, und sich die Flügel über den Trägerkörper 12 erstrecken. Hierdurch wird erreicht, daß sich das Flügelrad ähnlich einem Pfeil selbsttätig zentriert. Hierbei gilt, daß je größer der Abstand des Axiallagers 19 zu dem Kreuzungspunkt der Flügel 13 gewählt ist, um so besser die Zentrierwirkung des Flügelrades in der Kammer ist. Dem Axiallager 19 vorgelagert, befindet sich, wie bereits ausgeführt, der Magnet 60, der ebenfalls außerhalb des Flügelbereiches im Trägerkörper angeordnet sind. Durch diese Art der Anordnung des Magneten wird erreicht, daß sich im Bereich des Magneten kein Schmutz absetzen kann, da der Zwischenraum zwischen dem Magneten und der Kammerinnenwandung der Kammer 2 so groß ist, daß durch die Strömung der Schmutz immer unmittelbar weggerissen wird. Die Gefahr der Verschmutzung im Bereich des Magneten würde allerdings dann bestehen, wenn der Magnet im Bereich der Flügel 13 angeordnet wäre. Dies deshalb, weil sich gezeigt hat, daß sich durch den geringen Abstand zwischen den Flügeln 13 zur Innenwandung der Kammer 2 Schmutzablagerungen bilden, die die Wirkung des Magneten im Hinblick auf dessen Zusammenspiel mit der Spule beeinträchtigen können.

Dem Trägerkörper 12 vorgelagert ist eine weitere Lochscheibe 31. Die Lochscheibe 31 besitzt wiederum umfangsverteilt acht Bohrungen 32, wobei durch diese Bohrungen die auf die Scheibe auftreffende turbulente Strömung vergleichmäßigt wird. Die Größe der Bohrungen 32 ist hierbei derart, dies gilt ebenfalls für die Lochscheibe 21, daß der freie Querschnitt, den die Bohrungen dieser Lochscheiben beschreiben, kleiner ist als der Strömungsquerschnitt, der zwischen der Innenwandung der Kammer 2 des Gehäuses 1 und dem äußeren Durchmesser des Trägerkörpers 12 gegeben ist.

Die Lochscheibe 31 zeigt darüber hinaus zentrisch einen dornähnlichen Ansatz 35, durch den das axiale Spiel des Trägerkörpers 12 in der Kammer 2 eingeschränkt ist.

## Patentansprüche

1. Vorrichtung zur Bestimmung der Strömungsgeschwindigkeit eines Mediums, z. B. einer Flüssigkeit oder eines Gases, umfassend ein Gehäuse (1) mit einer von dem Medium axial durchströmten Kammer (2) zur Aufnahme eines Flügelrades (10) mit einem Flügel (13), wobei das Flügelrad (10) einen Trägerkörper (12) mit einer zentrischen Bohrung (15) zur Aufnahme einer Achse (11) aufweist, wobei der Trägerkörper (12) im Bereich der Achse (11) mindestens eine zu der zentrischen Bohrung hinführende radial verlaufende Öffnung (12a) aufweist,
**dadurch gekennzeichnet,**
daß die Achse (11) durch mindestens ein, vorzugsweise zwei Radiallager (17, 18) in dem Trägerkörper (12) gelagert ist, wobei zwischen der Bohrung des Trägerkörpers (12) und der Achse (11) ein radiales Spiel vorgesehen ist.

2. Vorrichtung nach Anspruch 1,
**dadurch gekennzeichnet,**
daß zur Lagerung der Achse (11) im Trägerkörper (12) ein Axiallager (19) vorgesehen ist.

3. Vorrichtung nach Anspruch 1,
**dadurch gekennzeichnet,**
daß der Flügel (13) nach Art eines Bogens ausgebildet sind.

4. Vorrichtung nach Anspruch 3,
**dadurch gekennzeichnet,**
daß zwei nach Art eines Bogens ausgebildete Flügel (13) kreuzweise zueinander auf dem Umfang des Trägerkörpers (12) angeordnet sind.

5. Vorrichtung nach Anspruch 4,
**dadurch gekennzeichnet,**
daß der Kreuzungspunkt der Flügel (13) des Flügelrades (10) in Strömungsrichtung gesehen (Pfeil 50) beabstandet (Pfeil 80) von dem Axiallager (19) auf dem Trägerkörper (12) angeordnet ist.

6. Vorrichtung nach Anspruch 3,
**dadurch gekennzeichnet,**
daß die Flügel (13) sich über einen wesentlichen Teil des Trägerkörpers (12) erstrecken.

7. Vorrichtung nach Anspruch 3,
**dadurch gekennzeichnet,**
daß die Flügel (13) einen Anstellwinkel von etwa 45 ° aufweisen.

8. Vorrichtung nach Anspruch 2,
**dadurch gekennzeichnet,**
daß der Trägerkörper (12) in Strömungsrichtung gesehen (Pfeil 50) vor dem Axiallager mindestens einen Impulsgeber (60) aufweist, der mit einem im Gehäuse (1) angeordneten Impulsnehmer (70) zur Ermittlung der Drehzahl des Flügelrades (10) zusammenarbeitet.

9. Vorrichtung nach Anspruch 1,
**dadurch gekennzeichnet,**
daß der Trägerkörper (12) sich in axialer Richtung wesentlich über die Länge der auf dem Trägerkörper (12) angeordneten Flügel (13) erstreckt.

10. Vorrichtung nach Anspruch 1,
**dadurch gekennzeichnet,**
daß in Strömungsrichtung gesehen vor dem Trägerkörper (12) eine vordere Lochscheibe (31) zur Vergleichmäßigung bzw. Ausrichtung der turbulenten Strömung in der Kammer (2) angeordnet ist.

11. Vorrichtung nach Anspruch 10,
**dadurch gekennzeichnet,**
daß die vordere Lochscheibe (31) einen auf den Trägerkörper (12) zugerichteten dornähnlichen Ansatz (35) zur Begrenzung des axialen Spiels des Trägerkörpers (12) auf der Achse (11) aufweist.

12. Vorrichtung nach Anspruch 1,
**dadurch gekennzeichnet,**
daß in Strömungsrichtung gesehen (Pfeil 50) hinter dem Trägerkörper (12) eine hintere Lochscheibe (21) vorgesehen ist.

13. Vorrichtung nach Anspruch 12,
**dadurch gekennzeichnet,**
daß die Achse (11) für den Trägerkörper (12) zentrisch in der hinteren Lochscheibe (21) gelagert ist.

14. Vorrichtung nach Anspruch 1,
**dadurch gekennzeichnet,**
daß der Trägerkörper (12) zylindrisch ausgebildet ist.

## Claims

1. Device used to determine the flow rate of a medium, e.g. of a fluid or a gas, including a housing (1) with a chamber (2) through which the medium is axially flowing and which receives an impeller wheel (10) with one blade (13), whereas the impeller wheel (10) is provided with a carrier body (12) having a centrical boring (15) for receiving an axle (11), whereas the carrier body (12) is provided in the area of the axle (11) with at least one opening (12a) running radially to the centrical boring in the carrier body (12),
**characterized in that** the axle (11) is arranged in the carrier body (12) by at least one, preferably two radial bearings (17, 18), whereas a radial allowance is provided between the boring of the carrier body (12) and the axle (11).

2. Device according to claim 1,
**characterized in that** an axle-bearing (19) is provided in the carrier body (12) for the accomodation of the axle (11).

3. Device according to claim 1,
**characterized in that** the blade (13) is designed as a bow.

4. Device according to claim 3,
**characterized in that** two bow-shaped blades (13) are accomodated crosswise on the periphery of the carrier body (12).

5. Device according to claim 4,
**characterized in that**, seen in direction of the flow (arrow 50), the crossing point of the blades (13) of impeller wheel (10) is spaced (arrow 80) from the axle-bearing (19) on the carrier body (12).

6. Device according to claim 3,
**characterized in that** the blades (13) are extending over a major part of the carrier body (12).

7. Device according to claim 3,
**characterized in that** the blades (13) are at an angle of incidence of approximately 45°.

8. Device according to claim 2,
**characterized in that** the carrier body (12) is provided, seen in direction of flow (arrow 50), with at least one pulse giver (60) in front of the axle-bearing, the pulse giver cooperating with a pulse receiver (70) accomodated in the housing (1) to determine the revolutions/min. of the impeller wheel (10).

9. Device according to claim 1,
**characterized in that** the carrier body (12) is axially extending over the essential length of the blades (13) accomodated on the carrier body (12).

10. Device according to claim 1,
**characterized in that**, seen in direction of the flow, a front perforated disk (31) is accomodated in front of the carrier body (12) to equalize or align the turbulent flow in the chamber (2).

11. Device according to claim 10,
**characterized in that** the front perforated disk (31) is provided with a gudgeon-like projection (35) facing the carrier body (12) and restricting the axial play of the carrier body (12) on the axle (11).

12. Device according to claim 1,
**characterized in that**, seen in direction of the flow (arrow 50), a rear perforated disk (21) is provided behind the carrier body (12).

13. Device according to claim 12,
**characterized in that** the axle (11) for carrier body (12) is centrically located in the rear perforated disk (21).

14. Device according to claim 1,
**characterized in that** the carrier body (12) is of a cylindrical design.

## Revendications

1. Dispositif pour déterminer la vitesse d'écoulement d'un fluide, d'un liquide ou d'un gaz par exemple, comprenant un boîtier (1) avec une chambre (2) traversée en direction axiale par le fluide, ledit boîtier étant destiné à recevoir une roue à ailettes (10) avec une ailette (13), ladite roue à ailettes (10) étant pourvue d'un support (12) avec un trou central (15) destiné à recevoir un axe (11), le support (12) étant pourvu dans la région de l'axe (11) d'une ouverture (12a) orientée radialement et donnant accès au trou central,
**caractérisé en ce que** l'axe (11) est soutenu par au moins un, de préférence deux paliers radiaux (17, 18) prévus dans le support (12), un jeu radial étant prévu entre le trou du support (12) et l'axe (11).

2. Dispositif selon la revendication 1,
**caractérisé en ce que** un palier à charge axiale (19) est prévu pour soutenir l'axe (11) dans le support (12).

3. Dispositif selon la revendication 1,
**caractérisé en ce que** l'ailette (13) a la forme d'un arc.

4. Dispositif selon la revendication 3,
**caractérisé en ce que** deux ailettes (13) ayant la forme d'un arc sont disposées en croix sur la circonférence du support (12).

5. Dispositif selon la revendication 4,
**caractérisé en ce que** le point d'intersection des ailettes (13) de la roue à ailettes (10) est placé, vu dans le sens d'écoulement (flèche 50), à quelque distance (flèche 80) du palier à charge axiale (19) sur le support (12).

6. Dispositif selon la revendication 3,
**caractérisé en ce que** les ailettes (13) s'étendent sur une grande partie du support (12).

7. Dispositif selon la revendication 3,
**caractérisé en ce que** les ailettes (13) ont un angle d'incidence d'environ 45°.

8. Dispositif selon la revendication 2,
**caractérisé en ce que** le support (12) est pourvu d'au moins un générateur d'impulsions (60) placé devant le palier à charge axiale si l'on regarde dans la direction d'écoulement (flèche 50), ledit générateur d'impulsions coopérant avec un récepteur d'impulsions (70) arrangé dans le boîtier pour déterminer la vitesse de la roue à ailettes (10).

9. Dispositif selon la revendication 1,
**caractérisé en ce que** le support (12) s'étend en direction axiale essentiellement sur la longueur des ailettes (13) disposées sur le support (12).

10. Dispositif selon la revendication 1,
**caractérisé en ce que** une plaque perforée avant (31) est placée devant le support (12) si l'on regarde dans la direction d'écoulement du fluide, ladite plaque perforée étant destinée à uniformiser, voire à orienter le flux turbulent dans la chambre (2).

11. Dispositif selon la revendication 10,
**caractérisé en ce que** la plaque perforée avant 31 possède un embout en forme de mandrin (35) dirigé vers le support (12) et destiné à limiter le jeu axial du support (12) sur l'axe (11).

12. Dispositif selon la revendication 1,
**caractérisé en ce que**, vu en direction de l'écoulement (flèche 50), une plaque perforée arrière (21) est prévue derrière le support (12).

13. Dispositif selon la revendication 12,
**caractérisé en ce que** l'axe (11) pour le support (12) est soutenu centralement dans la plaque perforée arrière (21).

14. Dispositif selon la revendication 1,
**caractérisé en ce que** le support (12) est de configuration cylindrique.
